Europäisches Patentamt

European Patent Office

Office européen des brevets

(19)

(11) **EP 0 746 089 B1**

(12) **EUROPEAN PATENT SPECIFICATION**

(45) Date of publication and mention
of the grant of the patent:
**21.11.2001 Bulletin 2001/47**

(51) Int Cl.⁷: **H02P 5/40**

(21) Application number: **96108520.6**

(22) Date of filing: **29.05.1996**

(54) **Synchronous motor control system and method of controlling synchronous motor**

Verfahren und System zur Steuerung eines Synchronmotors

Méthode et système de commande d'un moteur synchrone

(84) Designated Contracting States:
**DE FR GB**

(30) Priority: **29.05.1995 JP 15543295**

(43) Date of publication of application:
**04.12.1996 Bulletin 1996/49**

(73) Proprietors:
• **TOYOTA JIDOSHA KABUSHIKI KAISHA**
 **Aichi-ken 471-8571 (JP)**
• **KABUSHIKI KAISHA TOYOTA CHUO**
 **KENKYUSHO**
 **Aichi-gun Aichi-ken, 480-11 (JP)**

(72) Inventors:
• **Yasutomo, Kawabata**
 **Toyota-shi, Aichi-ken, 471 (JP)**
• **Yoshiaki, Taga**
 **Toyota-shi, Aichi-ken, 471 (JP)**
• **Masatoshi, Uchida**
 **Toyota-shi, Aichi-ken, 471 (JP)**
• **Akihiko, Kanamori**
 **Toyota-shi, Aichi-ken, 471 (JP)**
• **Yukio, Inaguma,**
 **c/o K.K. Toyota Chuo Kenkyusho**
 **Aichi-gun, Aichi-ken, 480-11 (JP)**

• **Toshinobu, Arakawa,**
 **c/o K.K. Toyota Chuo Kenkyusho**
 **Aichi-gun, Aichi-ken, 480-11 (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
**EP-A- 0 261 540     EP-A- 0 531 151**
**GB-A- 2 114 781     US-A- 4 240 020**
**US-A- 5 227 963**

• **PATENT ABSTRACTS OF JAPAN vol. 12, no. 244
(E-631), 9 July 1988 & JP-A-63 031493 (NIPPON
ELECTRIC IND CO LTD.), 10 February 1988,**
• **PATENT ABSTRACTS OF JAPAN vol. 18, no. 397
(E-1583), 26 July 1994 & JP-A-06 113583
(TOSHIBA CORP), 22 April 1994,**
• **ELEKTRONIK, vol. 38, no. 7, 31 March 1989,
MÜNCHEN, DE, pages 116-118, XP000024692
DIPL.-ING. C.UHRIG: "Trapez- oder
Sinusansteuerung?"**

# EP 0 746 089 B1

**Description**

## BACKGROUND OF THE INVENTION

**Field of the Invention**

The present invention relates to a synchronous motor control system for controlling each phase current of a synchronous motor, which drives and rotates a rotor by an interaction of a magnetic field produced by field coils through which a sine-wave multi-phase alternating current flows, with a magnetic field produced by permanent magnets mounted on the rotor, and also to a method of controlling such a synchronous motor. More specifically, the present invention pertains to a technique for improving mechanical outputs of such a synchronous motor.

## Description of the Related Art

Synchronous motors giving stable rotating characteristics at a synchronizing speed have been utilized in a variety of fields. The advance of semiconductor technology enables the frequency of power source to be easily varied and realizes a wide range of control for the revolving speed of the synchronous motor. This further expands the applicable field of the synchronous motors.

In three phase synchronous motors, for example, the phase for producing the primary magnetic flux of a revolving magnetic field is shifted at every 60 degrees of electrical angle. This causes torque ripples varying in a cycle of 60 degrees of electrical angle. When the input electric current is increased, the torque ripples generated by the fundamental cause are enhanced while drawing a substantially similar waveform. Such torque ripples can not be eliminated by a simple process.

Some improvements have been proposed for both the synchronous motor and the control system in order to eliminate such torque ripples. By way of example, a proposed control system decreases the phase current at an electrical angle corresponding to a maximum momentary torque and reduces the maximum torque in the cycle of torque ripples, thereby reducing the torque ripples.

As proposed in GB-A-2114781, torque ripples may also be reduced by providing supply voltages with a so called 60° trapezoidal waveform or by modifying the supply currents round a peak value of their sine wave basic waveforms.

One proposed improvement of the synchronous motor makes parts of armature windings of the respective phases overlapped with one another, thereby realizing the smooth shift of the primary magnetic flux at the time of phase shift. Another proposed structure obliquely cuts specific ends of permanent magnets along the rotational axis to reduce a fluctuation in torque.

These proposed techniques reduce torque ripples of a synchronous motor whereas lowering the mechanical output. In the technique of decreasing the input electric current in the range of electrical angles corresponding to greater torques for the purpose of reducing torque ripples, the decrease in input electrical energy lowers the mechanical outputs of the synchronous motor and thereby decreases the mean output torque. Another technique of making the windings dispersed in adjacent phases of the synchronous motor undesirably decreases the primary magnetic flux, which is dominant in generation of the torque of the synchronous motor. This lowers the maximum output torque per volume of the synchronous motor.

The lowered output accompanied with the reduction of torque ripples may cause problems in some fields to which the synchronous motor is applied. For example, in case that the synchronous motor is used as a power source of electric vehicles, the decrease in mechanical output per unit weight of the synchronous motor is undesirable. When the minimum torque is less than a predetermined level, the synchronous motor may be stepped out under the condition of large loading. The decrease in maximum mechanical output prevents the electric vehicle from running satisfactorily under the condition requiring large torques, for example, at the time of starting or ascending a slope.

## SUMMARY OF THE INVENTION

One object of the present invention is thus to increase a minimum torque observed at a specific electrical angle in a cycle of torque ripples, thereby eliminating torque ripples.

The above object is realized by a synchronous motor control system for controlling a synchronous motor, wherein multi-phase alternating currents flow through field coils of the synchronous motor, each current drawing a sine-wave as its basic waveform, and an internal rotor of the synchronous motor is driven to rotate by an interaction of a magnetic field produced by the multi-phase alternating currents with a magnetic field produced by permanent magnets mounted on the rotor. The synchronous motor control system being characterised in that it comprises:

current modification means for modifying a specified phase current of the multi-phase alternating currents close to a peak value of said alternating currents over a range of +/- 180/2n degrees from a specific electrical angle, at which said specified phase current drawing a sine-wave curve reaches a peak value thereof, wherein n denotes a number of phases of alternating currents, for remarkably improving the mean torque; and

balancing means for balancing a sum of the multi-phase alternating currents by changing phase currents other than the specified phase current modified by the current modification means.

The present invention is also directed to a method of controlling a synchronous motor, wherein multi-phase alternating currents flow through field coils of the synchronous motor, each current drawing a sine-wave as its basic waveform, and an internal rotor of the synchronous motor is driven to rotate by an interaction of a magnetic field produced by the multi-phase alternating currents with a magnetic field produced by permanent magnets mounted on the rotor. The method being characterised in that it comprises the steps of:

(a) modifying a specified phase current of said multi-phase alternating currents to a peak value of the alternating currents over a range of +/- 180/2n degrees from a specific electrical angle, at which said specified phase current drawing a sine-wave curve reaches a peak value thereof, wherein n denotes a number of phases of alternating currents; and
(b) changing phase currents other than the specified phase current modified in the step (a), thereby balancing a sum of said multi-phase alternating currents.

The synchronous motor control system or method of the present invention modifies a specified phase current to a peak value thereof or an equivalent value over a predetermined range around a specific electrical angle, at which a momentary value of the predetermined phase current reaches the peak value. Phase currents other than the predetermined phase current which is subject to the correction to the peak or equivalent value are not dominant in generation of the torque. The other phase currents are thus increased or decreased to balance the sum of all the phase currents. The structure of the present invention continuously keeps the absolute value of the target phase current, which is dominant in generation of torque, at its peak or equivalent value, thereby increasing the mechanical output and raising the minimum torque.

This structure effectively reduces torque ripples without decreasing the output of the synchronous motor. The system of the present invention does not waste the electric power and thus increases the mechanical output per unit weight of the synchronous motor.

These and other objects, features, aspects, and advantages of the present invention will become more apparent from the following detailed description of the preferred embodiment with the accompanying drawings.

## BRIEF DESCRIPTION OF THE DRAWINGS

Fig. 1 is a general block diagram illustrating a synchronous motor control system 10 embodying the present invention with a synchronous motor 40 controlled thereby;
Fig. 2 is a cross-sectional view illustrating the structure of the synchronous motor 40;
Fig. 3 is a cross-sectional view illustrating the structure of the synchronous motor 40, taken on the lines A-A' of Fig. 2;
Fig. 4 is a block diagram showing a logic circuit of the synchronous motor control system 10;
Fig. 5 is a flowchart showing an electric current control routine executed by the logic circuit of Fig. 4;
Fig. 6 is a graph showing variations in three phase alternating currents and coefficient of correction plotted against the electrical angle in the phase current correction process; and
Fig. 7 shows a waveform of torque ripples observed in the synchronous motor 40 driven by the synchronous motor control system 10.

## DESCRIPTION OF THE PREFERRED EMBODIMENT

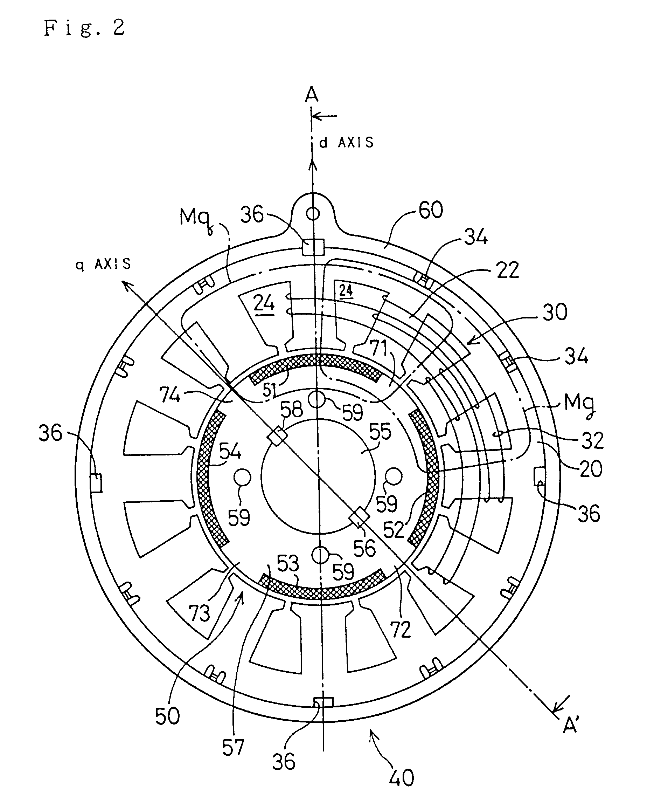

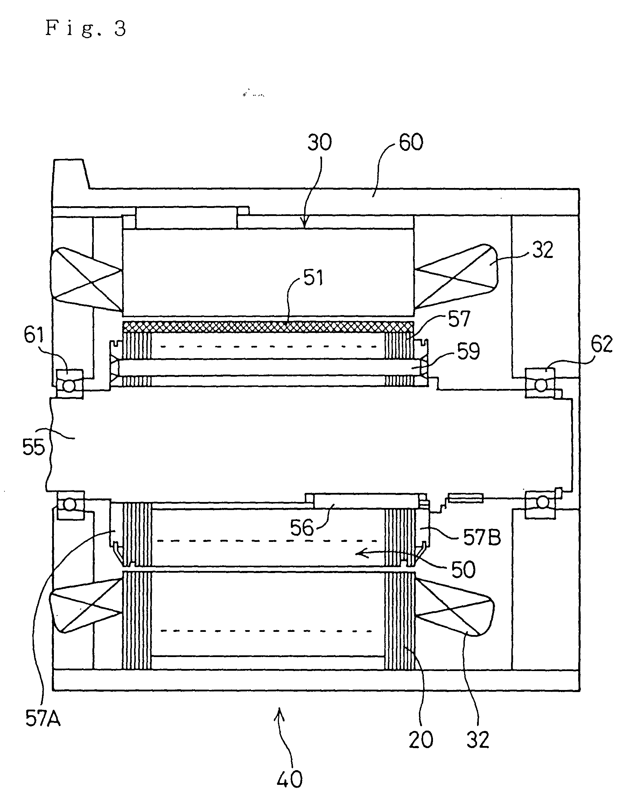

As a matter of convenience, general structure of the synchronous motor 40 is described first with reference to Figs. 2 and 3. The synchronous motor 40 includes a stator 30, a rotor 50, and a casing 60 for accommodating the stator 30 and the rotor 50 therein. The rotor 50 has permanent magnets 51 through 54 attached to the circumference thereof and a rotating shaft 55 arranged on the axial center thereof. The rotating shaft 55 is rotatably supported by a pair of bearings 61 and 62 mounted on the casing 60.

The rotor 50 includes a plurality of rotor elements 57 punched from a non-directional electromagnetic steel plate and laid one upon another as shown in Fig. 3. Each rotor element 57 has four salient poles 71 through 74 arranged

EP 0 746 089 B1

at 90-degree intervals as shown in Fig. 2. The salient poles 71 through 74 may be formed integrally with the rotor element 57 or otherwise formed separately and afterwards attached to the rotor element 57. Each rotor element 57 is further provided with four through holes, into which assembling pins 59 are inserted and fitted. After the plurality of rotor elements 57 are positioned by the pins 59 and laid one upon another, end plates 57A and 57B are arranged before and behind the laminate of rotor elements 57. The respective ends of the pins 59 are caulked or welded to the end plates 57A and 57B, so that the laminate of rotor elements 57 is fixed. The laminate of rotor elements 57 forms a hollow center for receiving the rotating shaft 55 pressed therein. The rotor elements 57 also have key grooves 58 for the purpose of fixture. The rotating shaft 55 with keys 56 received by key grooves formed in the rotating shaft 55 is inserted into the hollow center defined by the laminate of rotor elements 57. This completes the assembly of the rotor 50.

After the assembly of the rotor 50, the four permanent magnets 51 through 54 of a predetermined thickness are attached along the axis of the rotor 50 on the circumference of the rotor 50. The permanent magnets 51 through 54 are magnetized in the direction of thickness. When the rotor 50 is coupled with the stator 30, a magnetic path Mg is formed to pass through the adjacent permanent magnets, the rotor elements 57, and stator elements 20 (see Fig. 2).

Like the rotor elements 57, the stator elements 20 constituting the stator 30 are punched from a non-directional electromagnetic steel plate. Each stator element 20 includes a total of twelve teeth 22 as shown in Fig. 2. Each stator element 20 has, on its circumference, eight notches 34 used for welding and four key grooves 36 for receiving fixture keys. The stator 30 is assembled by positioning a laminate of plate-like stator elements 20 with a jig and welding the notches 34 formed on the circumference of the respective stator elements 20. Coils 32 for generating a revolving magnetic field in the stator 30 are wound on slots 24 formed between adjacent teeth 22.

The stator 30 thus assembled is coupled with the casing 60 by inserting fixture keys into key grooves formed on the inner surface of the casing 60 and the corresponding key grooves 36 formed on the circumference of the stator 30. The rotor 50 is then linked with the assembly of the stator 30 and the casing 60 to be rotatably supported by the bearings 61 and 62 of the casing 60. This completes the assembly of the synchronous motor 40.

When an exciting current is fed to the coils 32 on the stator 30 to generate a revolving magnetic field, a magnetic path Mq is formed to pass through the adjacent salient poles, the rotor elements 57, and the stator elements 20. In the description, an axis of the permanent magnet-based magnetic flux diametrically passing through the rotor 50 is referred to as 'd' axis, whereas an axis of the coil-based magnetic flux diametrically passing through the rotor 50 is referred to as 'q' axis. In this embodiment having the four poles, the d axis and the q axis are electrically arranged with the angle of 90 degrees. In other words, the q axis is in phase with a non-load induction electromotive force E0 of the synchronous motor 40, whereas the d axis is vectorially perpendicular to the non-load induction electromotive force E0. Each phase current I is decomposed to vectors of the d axis and the q axis. This enables the operation of the synchronous motor 40 to be easily monitored and controlled.

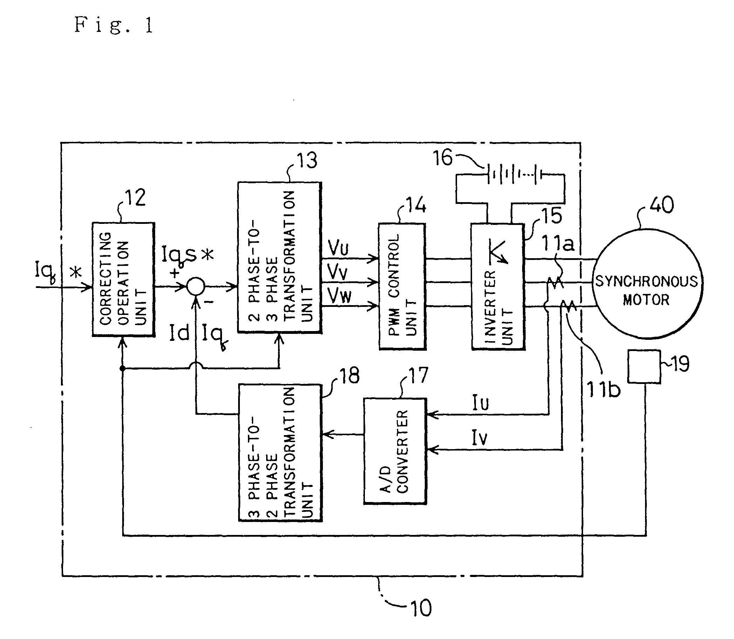

Referring to the block diagram of Fig. 1, the synchronous motor control system 10 of the embodiment includes a correcting operation unit 12, a 2 phase-to-3 phase transformation unit 13, a PWM (pulse width modulation) control unit 14, an inverter unit 15, an analog-to-digital (A/D) converter 17, and a 3 phase-to-2 phase transformation unit 18. The correcting operation unit 12 corrects an externally given electric current command value I* based on the loading condition of the synchronous motor 40 and thereby corrects a target phase current I of the synchronous motor 40. A difference between an output Is* from the correcting operation unit 12 and an output from the 3 phase-to-2 phase transformation unit 18 is calculated and used as feedback data for the subsequent control. These operations are carried out for values of electric currents Id and Iq of the d axis and the q axis.

The 2 phase-to-3 phase transformation unit 13 is a circuit for transforming the values of electric currents Id and Iq to actual phase currents (three-phase currents). The 2 phase-to-3 phase transformation unit 13 also transforms the three phase currents to signals of target voltages Vu, Vv, and Vw applied to the respective phases. The PWM control unit 14 converts the target voltages Vu, Vv, and Vw of the three phases thus obtained to the duty ratio of square waves, in order to realize the target voltages Vu, Vv, and Vw through the on-off control of a direct current power source (not shown). The inverter unit 15 controls internal six switching elements based on the on-off signals sent from the PWM control unit 14, and thereby applies voltages from a direct current power source 16 to the three-phase coils of the synchronous motor 40. The inverter unit 15 is further provided with electric current sensors 11a and 11b for measuring an U-phase current Iu and a V-phase current Iv, respectively. The respective phase currents Iu and Iv measured with the electric current sensors 11a and 11b are converted to digital data by the A/D converter 17 and used for the subsequent control as described below. An electrical angle θ required for the control of the synchronous motor 40 is measured with a rotational angle sensor 19 attached to the synchronous motor 40. The rotational angle sensor 19 used here has a known structure utilizing Hall elements.

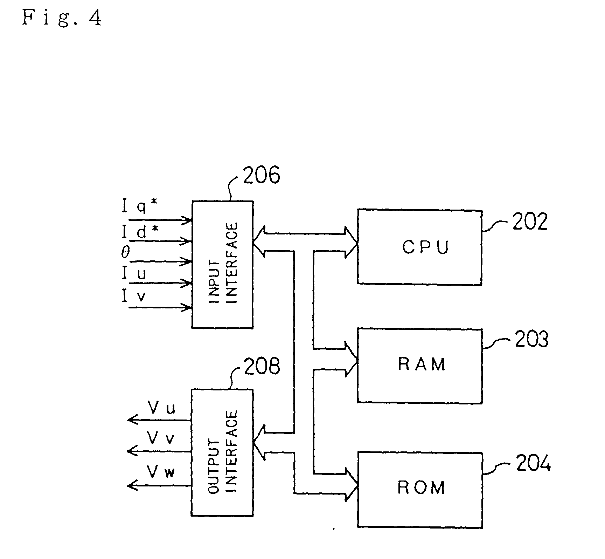

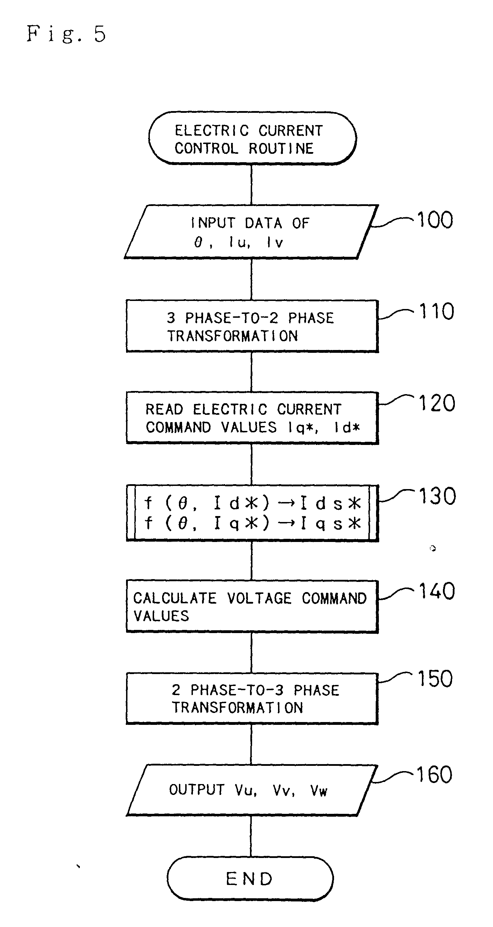

In the synchronous motor control system 10 of the embodiment, the correcting operation unit 12, the 2 phase-to-3 phase transformation unit 13, and the 3 phase-to-2 phase transformation unit 18 are actually constructed as a logic circuit. Referring to the block diagram of Fig. 4, the logic circuit includes a CPU 202, a RAM 203 working as a main memory of the CPU 202, a ROM 204 in which programs (described later) are stored in a non-volatile manner, an input interface 206, and an output interface 208. The CPU 202 executes a routine of electric current control (shown in

4

the flowchart of Fig. 5) stored in the ROM 204 and determines the target voltages Vu, Vv, and Vw of the three phases to be output to the PWM control unit 14. The functions of the respective elements shown in the block diagram of Fig. 1 are realized by executing this process.

When the program enters the electric current control routine of Fig. 5, the CPU 202 first receives data of phase currents Iu and Iv and electrical angle θ via the input interface 206 at step S100, and transforms the data of phase currents Iu and Iv and electrical angle θ to electric currents Id and Iq in the d-q coordinate system at step S110. This 3 phase to 2 phase transformation for giving the electric currents of d and q axes is implemented according to the operation expressed as Equation (1) given below. This process corresponds to the 3 phase-to-2 phase transformation unit 18 in the block diagram of Fig. 1.

$$\begin{bmatrix} Id \\ Iq \end{bmatrix} = \sqrt{2} \begin{bmatrix} -\sin(\theta-120) & \sin\theta \\ -\cos(\theta-120) & \cos\theta \end{bmatrix} \begin{bmatrix} Iu \\ Iv \end{bmatrix} \quad \cdots (1)$$

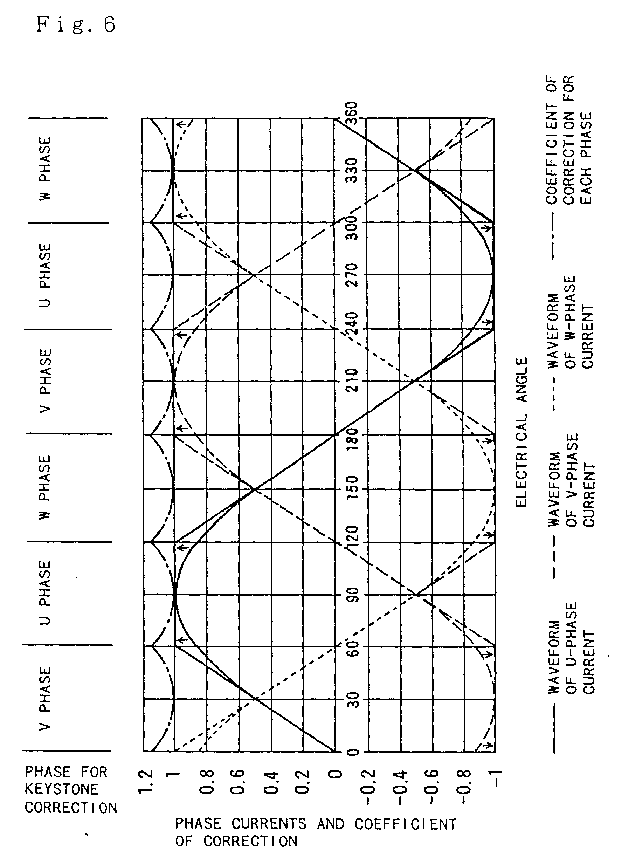

At subsequent step S120, the CPU 202 reads electric current command values (target electric currents) Iq* and Id*, which are determined according to the required torques and given to the synchronous motor control system 10. The electric current command values Iq* and Id* are multiplied by a coefficient of correction mapped to the electrical angle θ to yield corrected target electric currents Iqs* and Ids* at step S130. In order to attain target outputs, the target electric currents are multiplied by the coefficient of correction. The curve of one-dot chain line in the upper-most portion of Fig. 6 shows a variation in coefficient of correction used for the processing of step S130. Details of the coefficient of correction will be described later.

After the correction at step S130, the program proceeds to step S140 in the flowchart of Fig. 5, at which the CPU 202 calculates voltage command values Vd and Vq based on the respective differences between the corrected target electric currents Ids* and Iqs* and actual data of d-axis and q-axis electric currents Id and Iq. The voltage command values Vd and Vq are used to enable a desired electric current to flow through the synchronous motor 40. At subsequent step S150, the voltage command values Vd and Vq are transformed to actual three phase voltages Vu, Vv, and Vw through the 2 phase to 3 phase transformation. The transformation executed at step S150 is in the reverse of the transformation carried out at step S110. The voltages Vu, Vv, and Vw of the three phases are determined according to Equation (2) given below. This process corresponds to the 2 phase-to-3 phase transformation unit 13.

$$\begin{bmatrix} Vu \\ Vv \end{bmatrix} = \sqrt{\frac{2}{3}} \begin{bmatrix} \cos\theta & -\sin\theta \\ \cos(\theta-120) & -\sin(\theta-120) \end{bmatrix} \begin{bmatrix} Vd \\ Vq \end{bmatrix}$$

$$Vw = -Vu - Vv \qquad \cdots (2)$$

The results of 2 phase to 3 phase transformation are output to the PWM control unit 14 via the output interface 208 at step S160. The PWM control unit 14 receives the output signals, converts the magnitude of input voltages to the duty ratio of on-off signals, and outputs the duty ratio to the inverter unit 15. This process eventually controls each phase current of the synchronous motor 40 to a desired value and realizes the current control shown in Fig. 6.

The correction in the d-q coordinate system executed at step S130 in the flowchart of Fig. 5 modifies the three phase alternating currents to substantially trapezoidal waveforms. The graph of Fig. 6 shows the coefficient-of-correction curve expressed in the three-phase coordinate system as well as three phase currents before and after the correction. The coefficient-of-correction curve of one-dot chain line gives an identical value at every 60 degrees, which corresponds to one cycle of torque ripples in three-phase synchronous motors. The coefficient of correction is equal to the value '1' at the point of zero degree, where the target phase current reaches a peak value thereof, and equal to the value 1/(cos±30) ≈ at the points of ±30 degrees. No correction is carried out when the target phase current reaches its peak value. The degree of correction becomes greater for the smaller absolute value of the target phase current in the range of one cycle of torque ripples.

This results in varying the coefficient of correction according to the electrical angle. The target phase current accordingly coincides with the peak value in the range of ±30 degrees. In the graph of Fig. 6, each phase current is normalized to the value 1 or -1. This process enables the target phase current for producing the primary magnetic flux of the revolving magnetic field to be continuously kept at its peak value as shown by the arrows in Fig. 6. As a matter of convenience of illustration, the coefficient-of-correction curve of Fig. 6 shows only a variation in coefficient of correction applied to the target phase for producing the primary magnetic flux. The electric currents of the other two phases, which do not produce the primary magnetic flux, are corrected to maintain the balanced state of the three phase alternating currents. By way of example, in a range where the U-phase electric current of solid line is corrected to its peak value (in the range of 60 to 120 degrees and in the range of 240 to 300 degrees in the graph of Fig. 6), the V-phase electric current of broken line and the W-phase electric current of doted line are decreased by an amount corresponding to the increase in U-phase electric current. Similar corrections are implemented in other ranges.

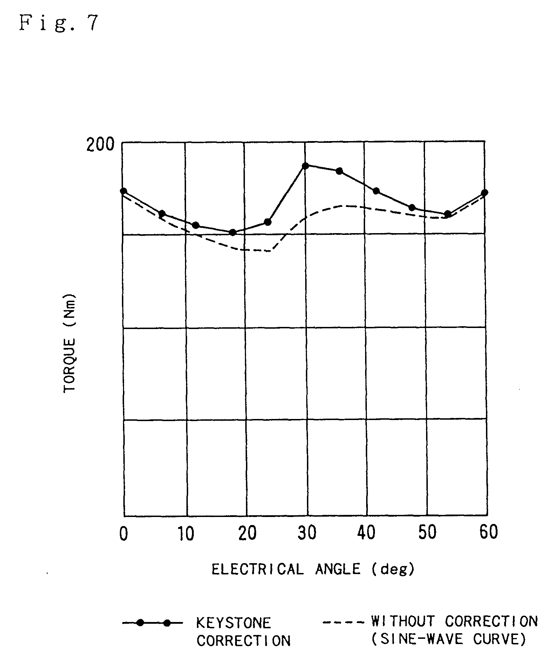

Fig. 7 shows a waveform of torque ripples varying in a cycle of electrical angle of 60 degrees and observed in the synchronous motor 40 when the synchronous motor 40 is subject to the correction discussed above. In the sine-wave curve of phase current without correction, the torque ripples cause the output torque to reach its minimum at the electrical angle of 23 to 24 degrees. The correction with the synchronous motor control system 10 of the embodiment significantly raises the output torque in the vicinity of the electrical angle corresponding to the minimum torque, while remarkably improving the mean torque.

The synchronous motor control system 10 of the embodiment corrects each phase current of three phase alternating currents to a substantially trapezoidal waveform in the vicinity of its peak value. The absolute value of the target phase current for producing the primary magnetic flux in the revolving magnetic field, which is shifted at every 60 degrees, is continuously kept at its peak value. Since the absolute value of the phase current, which is dominant in the output torque of the synchronous motor 40, is continuously kept at its peak value, the minimum output torque is effectively increased. This ensures sufficient output torque of the synchronous motor 40 mounted on electric vehicles. The structure of the embodiment also effectively prevents step-out of the synchronous motor 40 due to the insufficient torque. This structure uses electric currents exclusively to produce magnetic fluxes and rotate the rotor 50, thereby not wasting the electric power and preventing the generation of any heat which makes no contributions to the outputs. The synchronous motor control system 10 can significantly improve the output torque per unit weight of the synchronous motor 40.

The synchronous motor control system 10 of the embodiment executes the electrical angle-depending correction in the d-q coordinate system, thereby simplifying the control programs and not requiring the correction for all the three phases. Although the electrical angle $\theta$ of the synchronous motor 40 is measured with the rotational angle sensor 19 in the embodiment, the electrical angle may be estimated from the phase currents Iu and Iv. Such modification further simplifies the whole structure.

The above embodiment is only illustrative and not restrictive in any sense. There may be many modifications, alterations, and changes without departing from the scope or spirit of essential characteristics of the invention. By way of example, the three phase currents may be corrected directly without the 3 phase-to-2 phase transformation. The rotational angle may be measured with any known angle sensor, such as a resolver. The power source used to make each phase current of substantially trapezoidal waveform actually flow through the synchronous motor 40 is not restricted to the inverter circuit of PWM (pulse width modulation) control.

The scope of the present invention is limited only by the terms of the appended claims.

**Claims**

1.    A synchronous motor control system (10) for controlling a synchronous motor (40), wherein multi-phase alternating currents ($I_U$, $I_V$, $I_W$) flow through field coils (32) of said synchronous motor, each current drawing a sine-wave as its basic waveform, and an internal rotor (50) of said synchronous motor (40) is driven to rotate by an interaction of a magnetic field produced by said multi-phase alternating currents with a magnetic field produced by permanent magnets (54) mounted on said rotor,

     **characterized in that** said synchronous motor control system comprises:

     current modification means for modifying a specified phase current of said multi-phase alternating currents ($I_U$, $I_V$, $I_W$) to a peak value of said alternating currents over a range of $\pm 180/2n$ degrees from a specific electrical angle, at which said specified phase current drawing a sine-wave curve reaches a peak value thereof, wherein n denotes a number of phases of alternating currents ($I_U$, $I_V$, $I_W$), for remarkbly improving the mean torque; and balancing means for balancing a sum of said multi-phase alternating currents by changing phase currents other than said specified phase current modified by said current modification means.

2.    A synchronous motor control system in accordance with claim 1, wherein the current flowing in the motor (40) is measured and, in the current modification means, processed together with a signal from a rotational angle sensor (19).

3.    A synchronous motor control system in accordance with claim 1 or 2, wherein said multi-phase alternating currents

($I_U$, $I_V$, $I_W$) flowing through said field coils (32) of said synchronous motor (40) comprise three phase alternating currents.

4. A synchronous motor control system in accordance with one of the preceding claims, wherein said specified phase current modified by said current modification means and made flow through one of said field coils (32) of said synchronous motor (40) has a trapezoidal waveform.

5. A synchronous motor control system in accordance with claims one of the preceding claims, wherein said synchronous motor control system is applied to control a synchronous motor (40) mounted on a vehicle as a power source.

6. A method of controlling a synchronous motor (40), wherein multi-phase alternating currents ($I_U$, $I_V$, $I_W$) flow through field coils (32) of said synchronous motor (40), each current drawing a sine-wave as its basic waveform, and an internal rotor (50) of said synchronous motor is driven to rotate by an interaction of a magnetic field produced by said multi-phase alternating currents ($I_U$, $I_V$, $I_W$) with a magnetic field produced by permanent magnets (54) mounted on said rotor (50),
   **characterized in that** said method comprises the steps of:

   (a) modifying a specified phase current of said multi-phase alternating currents ($I_U$, $I_V$, $I_W$) to a peak value of said alternating currents over a range of $\pm 180/2n$ degrees from a specific electrical angle, at which said specified phase current drawing a sine-wave curve reaches a peak value thereof, wherein n denotes a number of phases of alternating currents ($I_U$, $I_V$, $I_W$); and
   (b) changing phase currents other than said specified phase current modified in said step (a), thereby balancing a sum of said multi-phase alternating currents ($I_U$, $I_V$, $I_W$).

7. A method in accordance with claim 6, wherein the current flowing in the motor (40) is measured in a measuring step and then, in the modifying step, processed together with a signal from a rotational angle sensor (19).

8. A method in accordance with claim 6 or 7, wherein said multi-phase alternating currents ($I_U$, $I_V$, $I_W$) flowing through said field coils (32) of said synchronous motor (40) comprise three phase alternating currents.

9. A method in accordance with one of the claims 6 to 8, wherein said specified phase current modified in said step (a) and made to flow through one of said field coils (32) of said synchronous motor (40) is controlled to have a trapezoidal waveform.

**Patentansprüche**

1. Synchronmotor-Steuersystem (10) zum Steuern eines Synchronmotors (40), wobei Mehrphasen-Wechselströme ($I_U$, $I_V$, $I_W$) durch Feldspulen (32) des Synchronmotors strömen, wobei jeder Strom eine Sinuswelle als seine grundlegende Wellenform beschreibt, und ein Innenrotor (50) des Synchronmotors (40) angetrieben wird, um sich durch eine Wechselwirkung eines Magnetfeldes, das durch die Mehrphasen-Wechselströme erzeugt wird, mit einem Magnetfeld, das durch die am Rotor montierten Dauermagneten (54) erzeugt wird, zu drehen,
   **dadurch gekennzeichnet, daß** das Synchronmotor-Steuersystem aufweist:

   eine Stromabwandlungseinrichtung zum Abwandeln eines spezifizierten Phasenstromes des Mehrphasen-Wechselstroms ($I_U$, $I_V$, $I_W$) auf einen Spitzenwert der Wechselströme über einen Bereich von $\pm 180/2n$ Grad von einem spezifischen elektrischen Winkel, bei dem der eine Sinuswellenkurve beschreibende spezifizierte Phasenstrom seinen Spitzenwert erreicht, wobei n eine Anzahl der Phasen der Wechselströme ($I_U$, $I_V$, $I_W$) bezeichnet, zum deutlichen Verbessern des mittleren Drehmoments und
   eine Ausgleicheinrichtung zum Ausgleichen einer Summe der Mehrphasen-Wechselströme durch Ändern der Phasenströme außer dem spezifizierten Phasenstrom, der durch die Stromabwandlungseinrichtung abgewandelt wurde.

2. Synchronmotor-Steuersystem entsprechend Anspruch 1, wobei der im Motor (40) fließende Strom gemessen wird und in der Stromabwandlungseinrichtung zusammen mit einem Signal von einem Rotationswinkelsensor (19) verarbeitet wird.

**3.** Synchronmotor-Steuersystem nach Anspruch 1 oder 2, wobei die Mehrphasen-Wechselströme ($I_U$, $I_V$, $I_W$), die durch die Feldspulen (32) des Synchronmotors (40) strömen, Dreiphasen-Wechselströme aufweisen.

**4.** Synchronmotor-Steuersystem nach einem der vorhergehenden Ansprüche, wobei der spezifizierte Phasenstrom, der durch die Stromabwandlungseinrichtung abgewandelt wurde und durch eine der Feldspulen (32) des Synchronmotors (40) geleitet wurde, Trapezwellenform hat.

**5.** Synchronmotor-Steuersystem nach einem der vorhergehenden Ansprüche, wobei das Synchronmotor-Steuersystem angewendet wird, um einen an einem Fahrzeug montierten Synchronmotor (40) als eine Energiequelle zu steuern.

**6.** Verfahren zum Steuern eines Synchronmotors (40), wobei Mehrphasen-Wechselströme ($I_U$, $I_V$, $I_W$) durch Feldspulen (32) des Synchronmotors (40) strömen, wobei jeder Strom eine Sinuswelle als seine grundlegende Wellenform beschreibt, und ein Innenrotor (50) des Synchronmotors angetrieben wird, um sich durch eine Wechselwirkung eines Magnetfeldes, das durch die Mehrphasen-Wechselströme ($I_U$, $I_V$, $I_W$) erzeugt wird, mit einem Magnetfeld, das durch die am Rotor (50) montierten Dauermagneten (54) erzeugt wird, zu drehen,
    **dadurch gekennzeichnet, daß** das Verfahren die Schritte aufweist:

(a) Abwandeln eines spezifizierten Phasenstroms der Mehrphasen-Wechselströme ($I_U$, $I_V$, $I_W$) auf einen Spitzenwert der Wechselströme über einen Bereich von $\pm180/2n$ Grad von einem spezifischen elektrischen Winkel, bei dem der spezifizierte Phasenstrom, der eine Sinuswellenkurve beschreibt, seinen Spitzenwert erreicht, wobei n eine Anzahl der Phasen der Wechselströme ($I_U$, $I_V$, $I_W$) bezeichnet, und
(b) Ändern der Phasenströme außer dem spezifizierten Phasenstrom, der in Schritt (a) abgewandelt wurde, wodurch eine Summe der Mehrphasen-Wechselströme ($I_U$, $I_V$, $I_W$) ausgeglichen wird.

**7.** Verfahren nach Anspruch 6, wobei der Strom, der im Motor (40) fließt, in einem Meßschritt gemessen wird und dann im Abwandlungsschritt zusammen mit einem Signal von einem Rotationswinkelsensor (19) verarbeitet wird.

**8.** Verfahren nach Anspruch 6 oder 7, wobei die Mehrphasen-Wechselströme ($I_U$, $I_V$, $I_W$), die durch die Feldspulen (32) des Synchronmotors (40) fließen, Dreiphasen-Wechselströme aufweisen.

**9.** Verfahren nach einem der Ansprüche 6 bis 8, wobei der spezifizierte Phasenstrom, der in Schritt (a) abgewandelt wurde und durch eine der Feldspulen (32) des Synchronmotors (40) geleitet wurde, gesteuert wird, so daß dieser Trapezwellenform aufweist.

**Revendications**

**1.** Un système (10) de contrôle de moteur électrique synchrone pour contrôler un moteur électrique synchrone (40), dans lequel des courants alternatifs multiphasés ($I_U$, $I_V$, $I_W$) s'écoulent à travers des bobinages de champ (32) dudit moteur électrique synchrone, chaque courant évoluant dans le temps selon une onde sinusoïdale comme forme d'onde de base, et un rotor interne (50) dudit moteur électrique synchrone (40) est entraîné en rotation par l'interaction d'un champ magnétique produit par lesdits courants alternatifs multiphasés avec le champ magnétique produit par des aimants permanents (54) montés sur ledit rotor,
**caractérisé en ce que** ledit système de contrôle de moteur électrique synchrone comporte :

- des moyens de modification de courant pour modifier un courant de phase spécifié desdits courants alternatifs multiphasés ($I_U$, $I_V$, $I_W$) pour leur faire prendre une valeur de crête desdits courants alternatifs sur une gamme de $\pm 180/2n$ degrés à partir d'un angle électrique spécifié, pour lequel ledit courant de phase spécifié évoluant dans le temps selon une courbe sinusoïdale atteint une valeur de crête de ladite phase, dans lequel n désigne le nombre de phases des courants alternatifs ($I_U$, $I_V$, $I_W$), afin d'améliorer de façon caractéristique le couple moyen ; et
- des moyens d'équilibrage pour équilibrer la somme desdits courants alternatifs multiphasés en modifiant les courants de phase autres que ledit courant de phase spécifié modifié par lesdits moyens de modification de courant.

**2.** Un système de contrôle de moteur électrique synchrone selon la revendication 1, dans lequel le courant s'écoulant dans le moteur électrique (40) est mesuré et est traité dans les moyens de modification de courant, en même temps qu'un signal en provenance d'un capteur (19) d'angle de rotation.

3. Un système de contrôle de moteur électrique synchrone selon la revendication 1 ou 2, dans lequel lesdits courants alternatifs multiphasés ($I_U$, $I_V$, $I_W$) s'écoulant à travers lesdits bobinages de champ (32) dudit moteur électrique synchrone (40) comportent des courants alternatifs triphasés.

4. Un système de contrôle de moteur électrique synchrone selon l'une des revendications précédentes, dans lequel ledit courant de phase spécifié modifié par lesdits moyens de modification de courant et qui s'écoule à travers l'un desdits bobinages de champ (32) dudit moteur électrique synchrone (40) présente une forme d'onde trapézoïdale.

5. Un système de contrôle de moteur électrique synchrone selon l'une des revendications précédentes, dans lequel ledit système de contrôle de moteur électrique synchrone est appliqué pour contrôler un moteur électrique synchrone (40) monté sur un véhicule pour servir de source motrice pour ce véhicule.

6. Un procédé de contrôle de moteur électrique synchrone (40), dans lequel des courants alternatifs multiphasés ($I_U$, $I_V$, $I_W$) s'écoulent à travers des bobinages de champ (32) dudit moteur électrique synchrone (40), chaque courant évoluant dans le temps selon une forme d'onde sinusoïdale comme forme d'onde de base, et un rotor interne (50) dudit moteur électrique synchrone est entraîné en rotation par l'interaction d'un champ magnétique produit par lesdits courants alternatifs multiphasés ($I_U$, $I_V$, $I_W$) avec un champ magnétique produit par des aimants permanents (54) montés sur ledit rotor (50),
**caractérisé en ce que** ledit procédé comporte les étapes consistant :

- (a) à modifier un courant de phase spécifié parmi lesdits courants alternatifs multiphasés ($I_U$, $I_V$, $I_W$) vers une valeur de crête desdits courants alternatifs sur une gamme de ± 180/2n degrés à partir d'un angle électrique spécifié, pour lequel ledit courant de phase spécifié évoluant dans le temps selon une courbe d'onde sinusoïdale atteint une valeur de crête de ladite phase, dans lequel n désigne le nombre de phases des courants alternatifs ($I_U$, $I_V$, $I_W$) ; et
- (b) à modifier les courants de phase autres que ledit courant de phase spécifié modifié à ladite étape (a), de manière à équilibrer la somme desdits courants alternatifs multiphasés ($I_U$, $I_V$, $I_W$).

7. Un procédé selon la revendication 6, dans lequel le courant s'écoulant dans le moteur électrique (40) est mesuré dans une étape de mesure et est ensuite traité, dans l'étape consistant à modifier, en même temps qu'un signal en provenance d'un capteur (19) d'angle de rotation.

8. Un procédé selon la revendication 6 ou 7, dans lequel lesdits courants alternatifs multiphasés ($I_U$, $I_V$, $I_W$) s'écoulant à travers lesdits bobinages de champ (32) dudit moteur électrique synchrone (40) comportent des courants alternatifs triphasés.

9. Un procédé selon l'une des revendications 6 à 8, dans lequel ledit courant de phase spécifié modifié au cours de ladite étape (a) et qui s'écoule à travers l'un desdits bobinages de champ (32) dudit moteur électrique synchrone (40) est contrôlé pour présenter une forme d'onde trapézoïdale.

Fig. 1

Fig. 2

Fig. 3

Fig. 4

I q *

I d *

θ

I u

I v

INPUT INTERFACE — 206

CPU — 202

RAM — 203

V u

V v

V w

OUTPUT INTERFACE — 208

ROM — 204

Fig. 5

```
      ┌─────────────────────┐
      │  ELECTRIC CURRENT   │
      │  CONTROL ROUTINE    │
      └─────────────────────┘
                 │
      ╱───────────────────────╲
     ╱    INPUT DATA OF         ╲───── 100
     ╲    θ , Iu, Iv            ╱
      ╲───────────────────────╱
                 │
      ┌───────────────────────┐
      │  3 PHASE-TO-2 PHASE   │───── 110
      │  TRANSFORMATION       │
      └───────────────────────┘
                 │
      ┌───────────────────────┐
      │  READ ELECTRIC CURRENT│───── 120
      │  COMMAND VALUES Iq*, Id*│
      └───────────────────────┘
                 │
      ┌───────────────────────┐
      │  f (θ, Id*)→Ids*      │───── 130
      │  f (θ, Iq*)→Iqs*      │
      └───────────────────────┘
                 │
      ┌───────────────────────┐
      │ CALCULATE VOLTAGE COMMAND│───── 140
      │ VALUES                │
      └───────────────────────┘
                 │
      ┌───────────────────────┐
      │  2 PHASE-TO-3 PHASE   │───── 150
      │  TRANSFORMATION       │
      └───────────────────────┘
                 │
      ╱───────────────────────╲
     ╱   OUTPUT Vu, Vv, Vw      ╲───── 160
      ╲───────────────────────╱
                 │
      ┌─────────────────────┐
      │        END          │
      └─────────────────────┘
```

Fig. 6

Fig. 7

KEYSTONE CORRECTION

WITHOUT CORRECTION (SINE-WAVE CURVE)